# EUROPEAN PATENT APPLICATION

(11) **EP 3 367 266 A1**
(43) Date of publication of application: **29.08.2018**
(21) Application number: 17851948.4
(22) Date of filing: 14.03.2017
(51) Int. Cl.: G06F 17/30

(54) **PAGE CONSTRUCTION METHOD, TERMINAL, COMPUTER-READABLE STORAGE MEDIUM AND PAGE CONSTRUCTION DEVICE**

(30) Priority: 28.12.2016 CN 201611237458
(71) Applicant: Ping An Technology (Shenzhen) Co., Ltd., Shenzhen, Guangdong 518000 (CN)
(72) Inventor: SHUAI, Yu, Shenzhen Guangdong 518000 (CN)
(74) Representative: Sun, Yiming
(86) International application number: PCT/CN2017/076524
(87) International publication number: WO 2018/120430

(57) **Abstract**

A page construction method includes the steps of: providing a construction interface of a page, and the construction interface at least including at least an object loading area and a relation setting area; determining whether or not a business table is loaded into the object loading area; determining whether or not a relation type is selected in the relation setting area; generating a page metadata according to the loaded business table and the selected relation type if the business table is loaded into the object loading area and the relation type is selected in the relation setting area; and generating a page associated with the business scene if the page generation instruction is received, according to page metadata. An embodiment of the present disclosure also discloses a terminal, a computer readable storage medium and a page construction device. The present disclosure reduces development workload and improves page construction efficiency.

## Description

### FIELD OF INVENTION

The present disclosure relates to the technical field of page construction, in particular to a page construction method, a terminal, a computer readable storage medium, and a page construction device.

### BACKGROUND OF INVENTION

At present, data layers of most enterprise application systems are created according to an entity-relationship (ER) model, so that a page corresponding to different business scenes can be developed by the ER model. However, the problems of creating a specific page based on each individual business scene by the aforementioned method become more obvious as user requirements are increased. Once if it is necessary to make a change such as adding a table object or changing a relation type between table objects, a re-development will be required, and the development workload will be increased, and the page construction efficiency will be lowered.

### SUMMARY OF INVENTION

Therefore, the present disclosure provides a page construction method, a terminal, a computer readable storage medium, and a page construction device capable of decreasing the development workload and improving the page construction efficiency.

Firstly, the present disclosure provides a page construction method including the steps of: providing a construction interface of a page, and the construction interface including at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables; determining whether or not the business table is loaded into the object loading area; determining whether or not the relation type is selected in the relation setting area; generating a page metadata according to the loaded business table and the selected relation type if the business table is loaded into the object loading area and the relation type is selected in the relation setting area; and generating a page associated with the business scene according to the page metadata if a page generation instruction is received.

Secondly, the present disclosure further provides a terminal including: a providing unit, for providing a construction interface of a page, the construction interface including at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables; a determination unit, for determining whether or not the business table is loaded into the object loading area, and determining whether or not the relation type is selected in the relation setting area; and a generation unit, for generating a page metadata according to the loaded business table and the selected relation type if the business table is loaded into the object loading area and the relation type is selected in the relation setting area, and generating a page associated with the business scene according to the page metadata if the page generation instruction is received.

Thirdly, the present disclosure further provides a computer readable storage medium including one or more programs executed by one or more processors to carry out the steps of: providing a construction interface of a page, and the construction interface including at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables; determining whether or not the business table is loaded into the object loading area; determining whether or not the relation type is selected in the relation setting area; generating a page metadata according to the loaded business table and the selected relation type if the business table is loaded into the object loading area and the relation type is selected in the relation setting area; and generating a page associated with the business scene according to the page metadata if a page generation instruction is received.

Fourthly, the present disclosure further provides a page construction device including a storage device and a processor; the storage device is provided for storing an instruction; and the processor reads the instruction in the storage device and executes the following procedure according to the instruction. This procedure includes the steps of: providing a construction interface of a page, and the construction interface including at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables; determining whether or not the business table is loaded into the object loading area; determining whether or not the relation type is selected in the relation setting area; generating a page metadata according to the loaded business table and the selected relation type if the business table is loaded into the object loading area and the relation type is selected in the relation setting area; and generating a page associated with the business scene according to the page metadata if a page generation instruction is received.

The present disclosure provides a page construction method which includes following steps: providing a construction interface of a page, and the construction interface including at least an object loading area and a relation setting area, and the object loading area being provided for a user to select a business scene and a business table from the business scene, and the relation setting area being provided for a user to set up a relation between the selected business tables; determining whether or not a business table is loaded into the object loading area and whether or not a relation type is selected in the relation setting area; generating a page metadata according to the loaded business table and the selected relation type if the business table is loaded into the object loading area and the relation type is selected in the relation setting area; and generating a page associated with the business scene according to the page metadata if a page generation instruction is received. In this embodiment of the present disclosure, a relation is set between the business tables through the construction page, so as to generate the page and reduce the development workload of the page. If there is any change of data in the business tables, the users simply reload the corresponding business table into construction page to generate the page quickly. The invention facilitates the changing and updating operations.

### BRIEF DESCRIPTION OF THE DRAWINGS

To understand the technical characteristics of the present disclosure intuitively and comprehensively, exemplary embodiments are used and illustrated in referenced figures of the drawings. It is intended that the embodiments and figures disclosed herein are to be considered illustrative rather than restrictive.
FIG. 1 is a flow chart of a page construction method in accordance with a first embodiment of the present disclosure;
FIG. 2 is a flow chart of a page construction method in accordance with a second embodiment of the present disclosure;
FIG. 3 is a flow chart of a page construction method in accordance with a third embodiment of the present disclosure;
FIG. 4 is a flow chart of a page construction method in accordance with a fourth embodiment of the present disclosure;
FIG. 5 is a schematic block diagram of a terminal in accordance with a fifth embodiment of the present disclosure;
FIG. 6 is a schematic block diagram of a terminal in accordance with a sixth embodiment of the present disclosure;
FIG. 7 is a schematic block diagram of a terminal in accordance with a ninth embodiment of the present disclosure;
FIG. 8 is a schematic block diagram of a terminal in accordance with an eighth embodiment of the present disclosure; and
FIG. 9 is a schematic block diagram of a page construction device in accordance with a ninth embodiment of the present disclosure.

### DESCRIPTION OF THE EMBODIMENTS

The technical characteristics of the present disclosure will become apparent with a clear and complete description of embodiments of the present disclosure accompanied with related drawings, and these embodiments are a part but not the whole of the embodiments of the present disclosure. Based on these embodiments of the invention, people having ordinary skill in the art may obtain all other embodiments without requiring further creative labor, and all of the above are covered by the scope of the invention.

It is noteworthy that the terminologies such as "comprise" and 'include" used in this specification and the claims refer to the existence of a described characteristic, the whole, a procedure, an operation, an element and/or a component, but they do not exclude the existence of addition of one or more other characteristics, the whole, procedures, elements and/or their sets.

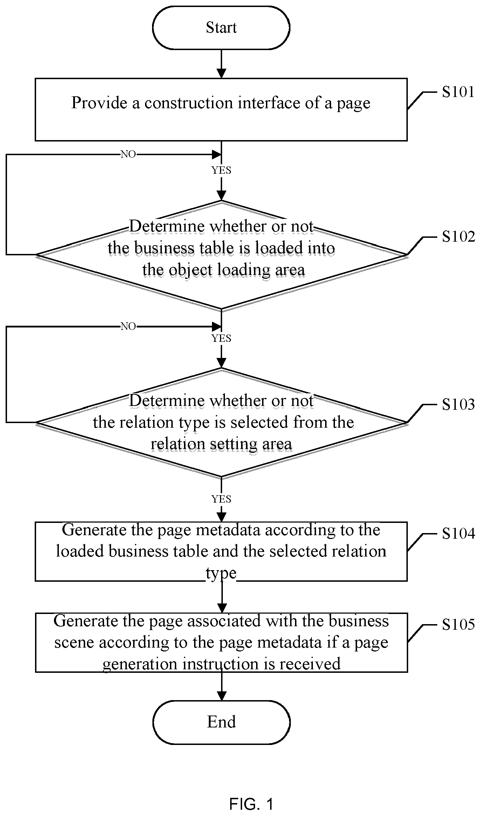

With reference to FIG. 1 for a flow chart of a page construction method in accordance with the first embodiment of the present disclosure, the page construction method includes the following steps S101 -S105.

S101: Provide a construction interface of a page. Wherein, the construction interface includes at least an object loading area and a relation setting area, and the object loading area is provided for a user to select one business scene from default business scenes and at least two business tables from the selected business scene, and the relation setting area is provided for a user to select at least a relation type from the default relation types to determine the relation between the selected business tables.

Specifically, the business scene of this embodiment of the invention may be market booth management, related employee data survey, etc. For example, the market booth survey may have several business tables with different contents such as the booth area, the booth quantity, the corresponding charge for each booth, the type of selling products, and the sale time, etc. It may also be a company's employee attendance table, salary table, job title table, workload table, or basic information table, etc. The business scene of this embodiment of the invention is preset in the object loading area, and different business scenes include several different business tables. After a user selects one of the business scenes and at least two business tables of the business scene, the relation setting area of this embodiment of the invention sets default relation types provided for the user's choice in order to show the relation between different business tables. Wherein, the default relation types include a parent-child relation, a many-to-many relation, and a group relation. In the parent-child relation, two business tables are divided into a child and a parent, and the child exists and relies on the existence of the parent, and the child is shown in an indent method. The parent may have a plurality of children created under the parent. The many-to-many relation is used to represent a mapping relation between two business tables. When a record is created, one of the business tables is selected first, and then the other business table is selected, and finally a middle relation attribute is filled, and a relation similar to the parent-child relation is shown. There are two ways of maintaining the group relation as described below: (1) A group is created first and then members are added into the group. (2) The group is selected directly from the member records, wherein the group may be selected from a pop-up search bar or a pull-down menu of the preset groups.

It is noteworthy that after the business tables are selected in the business scene, it is necessary to select relation type from default relation types in the relation setting area to determine the relation between any two selected business tables.

S102: Determine whether or not the business table is loaded into the object loading area.

S103: Determine whether or not the relation type is selected from the relation setting area.

In this embodiment of the invention, the order of carrying out the steps S102 and S103 is not limited. To timely generate the page metadata on the construction page according to the user's choices, it is necessary to determine whether or not the business table is loaded into the object loading area and determine whether or not the relation type is set in the relation setting area. If the business table is loaded into the object loading area and the relation type is selected in the relation setting area, then the step S104 will be executed. If the business table is not loaded into the object loading area, then the step S102 will be executed. If the relation type is not set in the relation setting area, then the step S103 will be executed.

S104: Generate the page metadata according to the loaded business table and the selected relation type.

In this embodiment of the invention, the page metadata are element data required for generating the page. After the business table is loaded into the object loading area and at least a relation type is selected in the relation setting area, the page metadata are generated according to the loaded business table and the selected relation type.

S105: Generate the page associated with the business scene according to the page metadata if a page generation instruction is received.

Specifically, if the page generation instruction is received, the page associated with the business scene is generated according to the page metadata after the page metadata are generated in the step S104. When a user wants to know about the relation information of the market booth, then the user may select one business scene of the market booth statistics from the object loading area, and four business tables including the booth area, booth charge, booth selling product type, and sale time from the business scene, and then selects any one relation type from the default relation types such as a parent-child relation, a many-to-many relation, and a group from the relation setting area in order to determine the relation between the selected business tables. Understandably, when it is necessary to make a selection from the default relation types for several times, the selected relation type may be the same or different. After the business table and the relation type are loaded into the construction page, the page metadata are generated according to the loaded business table and the selected relation type. After the page generation instruction is received, a page associated with the business scene is generated according to the page metadata and provided for the user's review.

In this embodiment of the invention, the page construction method includes the following steps of: providing a construction interface of a page, wherein the construction interface includes an object loading area and a relation setting area, and the object loading area is provided for a user to select a business scene and a business table from the business scene, and the relation setting area is provided for a user to set up a relation between the selected business tables; determining whether or not a business table is loaded into the object loading area and determining whether or not a relation type is selected in the relation setting area; generating a page metadata according to the loaded business table and the selected relation type if the business table is loaded into the object loading area and the relation type is selected in the business table; and generating the selected page associated with the business scene according to page metadata after a page generation instruction is received. In this embodiment of the invention, a relation is set up between the business table and the business table through the construction page to generate the page, so as to reduce the workload of the development of the page. If there is any change of data in the business table, the users simply reload a corresponding business table into the construction page to generate the page quickly, so as to facilitate the modification and update operations.

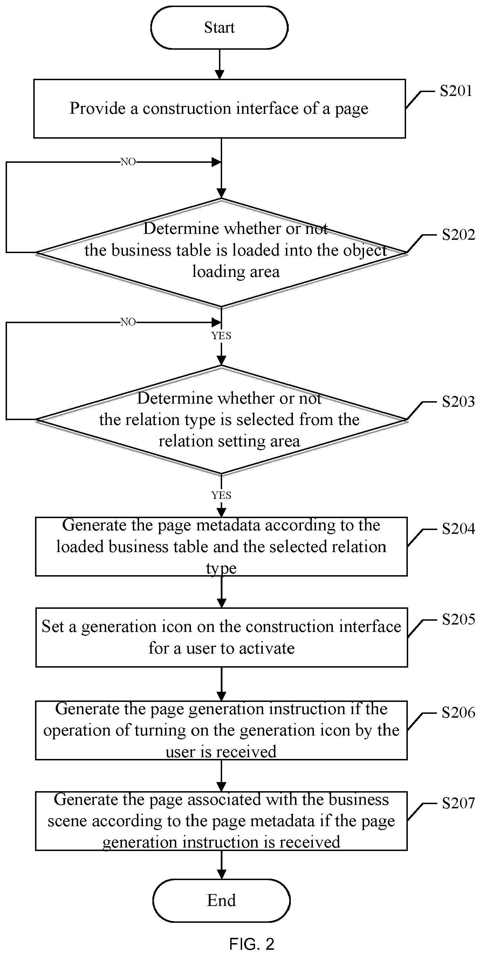

With reference to FIG. 2 for a flow chart of a page construction method in accordance with the second embodiment of the present disclosure, the method includes the steps S201∼S207. Wherein, the steps S201∼S204 are the same as the steps S101∼S104, and thus will not be repeated.

S205: Set a generation icon on the construction interface, wherein the generation icon is provided for a user to activate.

Specifically, after the user has loaded a business table into the construction page and selected a relation type in the relation setting area, a generation icon is created on the page for a user to activate, so as to facilitate users to control the operation of generating the page. For example, the user may click the generation icon to start the operation. Understandably, the shape and size of the generation icon and the position of the generation icon on a construction page are not limited specifically, but they may be changed as needed.

S206: Generate the page generation instruction if the operation of turning on the generation icon by the user is received.

In this embodiment of the present disclosure, the page generation instruction is generated after the user activates the generation icon. For example, a user may click the generation icon on the construction page to activate the generation icon to generate the page generation instruction. Understandably, the generation icon in some other feasible embodiments may be activated by voice control or infrared control to generate the page generation instruction.

S207: Generate the page associated with the business scene according to the page metadata if the page generation instruction is received.

Specifically, if the page generation instruction is received, then the page associated with the business scene will be generated according to the page metadata. When the user wants to know about the related information of a market booth then the user may select the business scene of the market booth statistics in the object loading area, and selects four business tables such as a booth area, a booth charge, a booth selling product type, and a sale time in the business scene, and then selects any one relation type from the default relation types such as a parent-child relation, a many-to-many relation, and a group relation in the relation setting area to determine the relation between the selected business tables. Understandably, when it is necessary to make a selection from the default relation types for several times, the selected relation type may be the same or different. After the business table and the relation type are loaded into the construction page, the page metadata are generated according to the loaded business table and the selected relation type. After the page generation instruction is received, the page associated with the business scene is generated according to the page metadata and provided for a user's review.

In this embodiment of the present disclosure, the page construction method includes the steps of: providing a construction interface of a page, wherein the construction interface includes an object loading area and a relation setting area, and the object loading area is provided for a user to select a business scene and a business table in the business scene, and the relation setting area is provided for a user to set up a relation between the selected business tables; determining whether or not a business table is loaded into the object loading area and determining whether or not a relation type is selected in the relation setting area; generating a page metadata according to the loaded business table and the selected relation type and setting a generating icon on the construction page for a user to activate if the business table is loaded into the object loading area and the relation type is selected in the relation setting area; generating the page generation instruction if an operation activated by the user is received; and generating a page associated with the selected business scene according to the page metadata, after a page generation instruction is received. In this embodiment of the invention, a relation is set up between the business tables through the construction page, so as to generate the page, and reduce the workload of developing the page. If there is any change of data in the business table, the users simply need to reload a corresponding business table into the construction page to generate the page quickly to facilitate the modification and update operations.

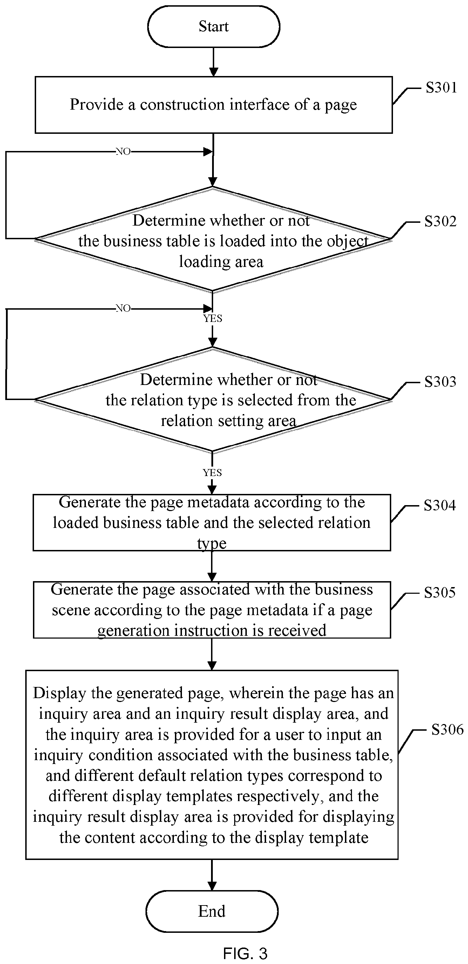

With reference to FIG. 3 for a flow chart of a page construction method in accordance with the third embodiment of the present disclosure, the method includes the steps S301-S306. Wherein, the steps S301-S305 are the same as the steps S101-S105, and thus will not be repeated.

S306: Display the generated page, wherein the page has an inquiry area and an inquiry result display area, and the inquiry area is provided for a user to input an inquiry condition associated with the business table, and different default relation types correspond to different display templates respectively, and the inquiry result display area is provided for displaying the content according to the display template.

In this embodiment of the present disclosure, the terminal displays the generated page to facilitate users to view the generated page. The page also has the inquiry area and the inquiry result display area, and the inquiry area is provided for a user to input an inquiry condition associated with the business table such as a keyword or a name in the business table. To display the business tables of different default relation types, a corresponding display template is matched with a different default relation type. For example, a display template 1 is set for a parent-child relation, a display template 2 is set for a many-to-many relation, and a display template 3 is set for a group relation, so that the relation between the business tables of different relation types can be shown. The inquiry result display area is provided for displaying the content according to the display template and provided for a user's review.

In this embodiment of the invention, the page construction method includes the steps of: providing a construction interface of a page, wherein the construction interface includes at least an object loading area and a relation setting area, and the object loading area is provided for a user to select a business scene and a business table from the business scene, and the relation setting area is provided for a user to set up a relation between the selected business tables; determining whether or not a business table is loaded into the object loading area and determining whether or not at least a relation type is selected in the relation setting area; generating a page metadata according to the loaded business table and the selected relation type if the business table is loaded into the object loading area and the relation type is selected in the relation setting area; and generating the selected page associated with the business scene according to the page metadata and displaying the generated page, after a page generation instruction is received. In this embodiment of the invention, a relation between the business tables is set through the construction page to generate a page, so as to reduce the workload of developing the page. When there is any change of data in the business table, a user simply needs to reload a corresponding business table into the construction page to generate a page quickly, so as to facilitate the modification and update operations.

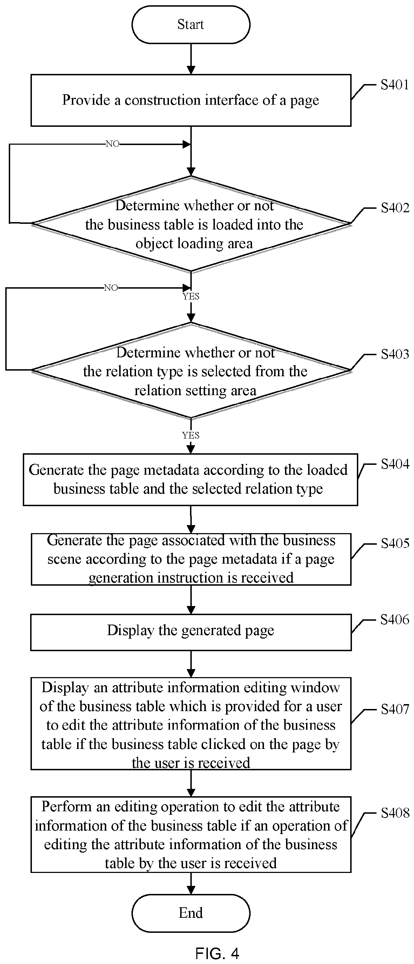

With reference to FIG. 4 for a flow chart of a page construction method in accordance with the fourth embodiment of the present disclosure, the method includes the steps S401∼S408. Wherein, the steps S401∼S406 are the same as the steps S101∼S106, and thus will not be repeated.

S407: Display an attribute information editing window of the business table which is provided for a user to edit the attribute information of the business table if the business table clicked on the page by the user is received.

Specifically, the attribute information of the business table includes a creation time, a name, a rename, a belonging business type of the business table, and a relation type associated with the business table. To facilitate users to modify the attribute information of the business table, the terminal interface of this embodiment of the invention displays the attribute information editing window of the business table which is provided for the user to edit the corresponding attribute information of the business table. When the business table is situated on the construction page, the business table may be set as a floating icon or a clickable icon which is provided for a user to click, or to click to display a corresponding attribute editing window after entering into the business table. However, the invention is not limited to such arrangement only.

S408: Perform an editing operation to edit the attribute information of the business table if an operation of editing the attribute information of the business table by the user is received.

Specifically, the editing operation may include Delete, Modify, Add, and Rename, etc. The corresponding attribute information of the business table is modified according to the user's operation if an operation of editing the attribute information of the business table by the user is received, so as to achieve the effects of modifying the information of the business table quickly and avoid a redevelopment.

In this embodiment of the invention, the page construction method includes the steps of: providing a construction interface of a page, wherein the construction interface has at least an object loading area and a relation setting area, and the object loading area is provided for a user to select a business scene and a business table from the business scene, and the relation setting area is provided for a user to set up a relation between the selected business tables; determining whether or not the business table is loaded into the object loading area and determining whether or not the relation type is selected in the relation setting area; generating a page metadata according to the loaded business table and the selected relation type if the business table is loaded into the object loading area and the relation type is selected in the relation setting area; generating the selected page associated with the business scene according to the page metadata after a page generation instruction is received; and displaying an attribute information editing window of the business table which is provided for a user to edit the attribute information of the business table if a user's operation of clicking the business table on the page is received. In this embodiment of the present disclosure, a relation is set up between the business tables through the construction page to generate a page, so as to reduce the workload of developing the page. When there is any change of data in the business table, users simply need to reload a corresponding business table into the construction page to generate a page quickly, so as to facilitate the modification and update operations.

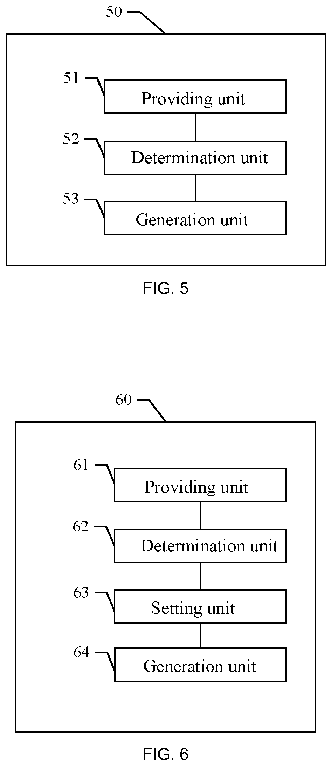

With reference to FIG. 5 for a schematic block diagram of a terminal in accordance with the fifth embodiment of the present disclosure, the terminal 50 includes a providing unit 51, a determination unit 52, and a generation unit 53.

The providing unit 51 is used for providing a construction interface of a page, wherein the construction interface includes at least an object loading area and a relation setting area, and the object loading area is provided for a user to select one business scene from the default business scenes and at least two business table from the selected business scene, and the relation setting area is provided for a user to select at least a relation type from the default relation types to determine the relation between the selected business tables.

In this embodiment of the invention, the business scene may be market booth management, related employee data survey, etc. For example, the market booth survey may have a plurality of business tables with different contents such as the booth area, booth quantity, corresponding charge of each booth, selling product type, sale time, etc. It may also be a company employee attendance table, a salary table, a job title table, a workload table, a basic information table, etc. In this embodiment of the invention, the business scenes are preset into the object loading area, and the different business scenes include a plurality of different business tables. After a user selects one of the business scenes and at least two business tables of the business scene, default relation types are set in the relation setting area and provided for the user to select in order to show the relation between different business tables. Wherein, the default relation types include a parent-child relation, a many-to-many relation, and a group relation. The parent-child relation divides the two business tables into a child and a parent, and the child exists depending on the existence of the parent and is shown by an indent method. The parent may have a plurality of children. The many-to-many relation is used to represent a mapping relation between the two business tables. When records are created, one of the business tables is selected first, and then the other business table is selected, and finally a middle relation attribute is filled and displayed similar to the parent-child relation. The group relation has two maintenance methods: (1) A group is created first, and then members are added into the group; (2) The group is selected directly from the member records, wherein the group may be selected from a pop-up search bar or a pull-down menu of the preset groups.

It is noteworthy that after the business tables are selected in the business scene, it is necessary to select relation type from default relation types in the relation setting area to determine the relation between any two selected business tables.

The determination unit 52 is provided for determining whether or not the business table is loaded into the object loading area and determining whether or not at least a relation type is selected in the relation setting area.

Specifically, to timely generate the page metadata on the construction page according to the user's selection, an embodiment of the present disclosure determines whether or not the business table is loaded into the object loading area and determines whether or not the relation type is selected in the relation setting area. If yes, then the generation unit 53 will generate the page metadata according to the loaded business table and the selected relation type, or else the determination unit 52 will continue the determination operation.

The generation unit 53 is provided for generating the page metadata according to the loaded business table and the selected relation type if the business table is loaded into the object loading area and the relation type is selected in the relation setting area.

If a page generation instruction is received, a page associated with the business scene will be generated according to the page metadata.

In this embodiment of the invention, the page metadata generates element data required by the page. After the determination unit 52 determines that the business table is loaded into the object loading area and the relation type is selected in the relation setting area, the page metadata are generated according to the loaded business table and the selected relation type.

Specifically, after the generation unit 53 generates the page metadata, if a page generation instruction is received, then the generation unit 53 will generate a page associated with the business scene according to the page metadata. When a user wants to know about the related information of the market booth, the user selects a business of the market booth statistics in the object loading area, and selects four business tables including a booth area, a booth charge, a booth selling product type, and a sale time from the business scene, and then selects any one relation type from the default relation types such as a parent-child relation, a many-to-many relation, and a group relation in the relation setting area to determine the relation between the selected business tables. Understandably, when it is necessary to make a selection in the default relation types for several times, the selected relation type may be the same or different. After the business table and the relation type are loaded into the construction page, the page metadata are generated according to the loaded business table and the selected relation type. After a page generation instruction is received, a page associated with the business scene is generated according to the page metadata and provided for the users' review.

In this embodiment of the invention, the providing unit 51 is used for providing a construction interface of a page, wherein the construction interface includes at least an object loading area and a relation setting area, and the object loading area is provided for a user to select a business scene from the default business scenes and business table from the selected business scene, the relation setting area provided for a user to select a relation type from the default relation types to determine the relation between the selected business tables., and the determination unit 52 determines whether or not the business table is loaded into the object loading area and determines whether or not the relation type is selected in the relation setting area. If the business table is loaded into the object loading area and the relation type is selected in the relation setting area, then the generation unit 53 will generate a page metadata according to the loaded business table and the selected relation type. After the page generation instruction is received, the generation unit 53 will generate a selected page associated with the business scene according to the page metadata. In an embodiment of the invention, the relation between the business tables is set up through the construction page to generate a page, so as to reduce the workload of developing the page. When there is any change of data in the business table, the users simply need to reload a corresponding business table into the construction page to generate a page quickly, so as to facilitate the modification and update operations.

With reference to FIG. 6 for a schematic block diagram of a terminal in accordance with the sixth embodiment of the present disclosure, the terminal 60 includes a providing unit 61, a determination unit 62, a setting unit 63, and a generation unit 64.

The providing unit 61 is used for providing a construction interface of a page, wherein the construction interface includes at least an object loading area and a relation setting area, and the object loading area is provided for a user to select a business scene from the default business scenes and at least two business table from the selected business scene, and the relation setting area is provided for a user to select at least a relation type from the default relation types to determine the relation between the selected business tables.

The determination unit 62 is provided for determining whether or not the business table is loaded into the object loading area and determining whether or not at least a relation type is selected in the relation setting area.

The setting unit 63 is provided for setting a generation icon on the construction interface, wherein the generation icon is provided for a user to activate.

Specifically, after a user loads the business table into the construction page and selects the relation type in the relation setting area, the user may use the generation icon set on the construction page to activate the generation icon, so as to facilitate users to control the operation of generating the page of this embodiment of the invention. Understandably, the shape and size of the generation icon and the position on the construction page. However, the invention is not just limited to such arrangement only, and it may also be set according to the user requirements.

In this embodiment of the invention, the page generation instruction is generated after the user activates the generation icon. For example, the user clicks the generation icon on the construction page to activate the generation icon, so as to generate the page generation instruction. Understandably, the generation icon of some feasible embodiments may be activated by voice control or infrared control to generate the page generation instruction.

The generation unit 64 is provided for generating a page metadata according to the loaded business table and the selected relation type if the business table is loaded into the object loading area and the relation type is selected in the relation setting area, generating the page generation instruction if an operation of turning on the generation icon by the user is received, and generating a page associated with the business scene according to the page metadata if the page generation instruction is received.

In this embodiment of the invention, the providing unit 61 provides a construction interface of a page. The construction interface includes at least an object loading area and a relation setting area, and the object loading area is provided for a user to select a business scene and a business table from the business scene, and the relation setting area is provided for a user to set up a relation between the selected business tables, and the determination unit 62 determines whether or not a business table is loaded into the object loading area and whether or not a relation type is selected in the relation setting area. If the business table is loaded into the object loading area and the relation type is selected in the relation setting area, the generation unit 64 will generate the page metadata according to the loaded business table and the selected relation type, and a generation icon is set on the construction page by the setting unit 63 and provided for a user to activate. If an operation of activating the generation icon by the user is received, then the generation unit 64 will generate the page generation instruction. After the page generation instruction is received, a page associated with the selected business scene is generated by the generation unit 64 according to the page metadata. In this embodiment of the invention, a relation is set up between the business tables in the construction page to generate a page, so as to reduce the workload of developing the page. When there is any change of data in the business table, the users simply need to reload a corresponding business table into the construction page to generate a page quickly, so as to facilitate the modification and update operations.

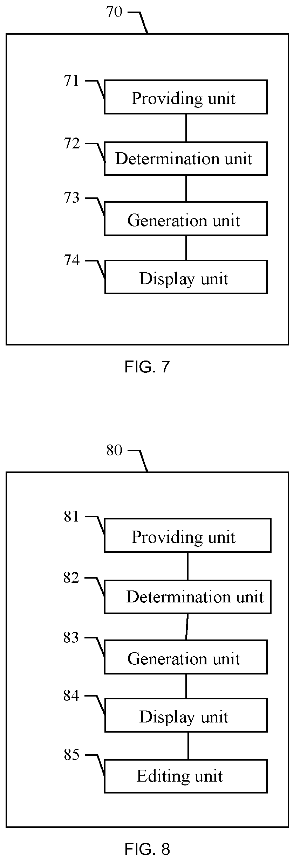

With reference to FIG. 7 for a schematic block diagram of a terminal in accordance with the seventh embodiment of the present disclosure, the terminal 70 includes a providing unit 71, a determination unit 72, a generation unit 73, and a display unit 74.

The providing unit 71 is used for providing a construction interface of a page, wherein the construction interface includes at least an object loading area and a relation setting area, and the object loading area is provided for a user to select a business scene from the default business scenes and at least two business table from the selected business scene, and the relation setting area is provided for a user to select at least a relation type from the default relation types to determine the relation between the selected business tables.

The determination unit 72 is provided for determining whether or not the business table is loaded into the object loading area and determining whether or not at least a relation type is selected in the relation setting area.

The generation unit 73 is provided for generating a page metadata according to the loaded business table and the selected relation type if the business table is loaded into the object loading area and the relation type is selected in the relation setting area, and generating a page associated with the business scene according to the page metadata if a page generation instruction is received.

The display unit 74 displays the generated page, and the page has an inquiry area and an inquiry result display area, and the inquiry area is provided for a user to input an inquiry condition associated with the business table, and different default relation types correspond to different display templates, and the inquiry result display area is provided for displaying the content according to the display template.

In this embodiment of the invention, the generated page is displayed on the terminal to facilitate users to review the generated page. The page also has an inquiry area and an inquiry result display area, and the inquiry area is provided for a user to input an inquiry condition associated with the business table such as a keyword in the business table or a name of the business table. To display the business tables of different default relation types, the different default relation types of an embodiment of the invention have corresponding display templates for different configurations. For example, the parent-child relation has a display template 1, and the corresponding many-to-many relation has a display template 2, and the corresponding group relation has a display template 3 to facilitate displaying the relation between the business tables of different relation types. The inquiry result display area is provided for displaying the content according to the display template and provided for the users' review.

In this embodiment of the present disclosure, the providing unit 71 provides a construction interface of a page, wherein the construction interface includes at least an object loading area and a relation setting area, and the object loading area is provided for a user to select a business scene and a business table from the business scene, and the relation setting area is provided for a user to set up a relation between the selected business tables, and the determination unit 72 determines whether or not the business table is loaded into the object loading area and determines whether or not the relation type is selected in the relation setting area. If yes, the page metadata will be generated according to the loaded business table and the selected relation type. After a page generation instruction is received, the generation unit 73 generates the selected page associated with the business scene according to the page metadata and the display unit 74 displays the generated page. In this embodiment of the invention, the relation between the business table and the business table is set up through the construction page to generate a page, so as to reduce the workload of developing the page. When there is any change of data in the business table, the users simply need to reload a corresponding business table into the construction page to generate a page quickly and facilitate the modification and update operations.

With reference to FIG. 8 for a schematic block diagram of a terminal in accordance with the eighth embodiment of the present disclosure, the terminal 80 includes a providing unit 81, a determination unit 82, a generation unit 83, a display unit 84, and an editing unit 85.

The providing unit 81 is used for providing a construction interface of a page, wherein the construction interface includes at least an object loading area and a relation setting area, and the object loading area is provided for a user to select a business scene from the default business scenes and at least two business table from the selected business scene, and the relation setting area is provided for a user to select at least a relation type from the default relation types to determine the relation between the selected business tables.

The determination unit 82 is provided for determining whether or not the business table is loaded into the object loading area and determining whether or not at least a relation type is selected in the relation setting area.

The generation unit 83 is provided for generating a page metadata according to the loaded business table and the selected relation type if the business table is loaded into the object loading area and the relation type is selected in the relation setting area, and generating a page associated with the business scene according to the page metadata if a page generation instruction is received

The display unit 84 displays the generated page, and the page has an inquiry area and an inquiry result display area, and the inquiry area is provided for a user to input an inquiry condition associated with the business table, and different default relation types correspond to different display templates, and the inquiry result display area is provided for displaying the content according to the display template.

The editing unit 85 is provided for editing the attribute information of the business table if an operation of editing the attribute information of the business table by the user is received.

Specifically, the attribute information of the business table includes a creation time, a name, a rename, a belonging business type of the business table, and a relation type associated with the business table. To facilitate users to modify the attribute information of the business table, the terminal interface of this embodiment of the invention displays the attribute information editing window of the business table which is provided for the user to edit the corresponding attribute information of the business table. When the business table is situated on the construction page, the business table may be set as a floating icon or a clickable icon which is provided for a user to click, or to click to display a corresponding attribute editing window after entering into the business table. However, the invention is not limited to such arrangement only.

The editing operation includes Delete, Modify, Add, Rename, etc. If an operation of editing the attribute information of the business table by a user is received, then the corresponding attribute information of the business table will be modified according to the user's operation to achieve the effect of modifying the information of the business table quickly and avoid the re-development.

In this embodiment of the invention, the providing unit 81 provides a construction interface of a page, and the construction interface includes at least an object loading area and a relation setting area, and the object loading area is provided for a user to select a business scene and a business table from the business scene, and the relation setting area is provided for a user to set up a relation between the selected business tables, and the determination unit 82 determines whether or not the business table is loaded into the object loading area and determines whether or not the relation type is selected in the relation setting area. If yes, then the page metadata will be generated according to the loaded business table and the selected relation type. After a page generation instruction is received, the generation unit 83 generates the selected page associated with the business scene according to the page metadata and the display unit 84 displays the generated page if the business table clicked on the page by the user is received. The display unit 84 displays an attribute information editing window of the business table which is provided for a user to edit the attribute information, of the business table, and if an operation of editing the attribute information of the business table by the user is received, then the editing unit 85 will perform the editing operation to edit the attribute information of the business table. In this embodiment of the invention, a relation is set up between the business tables through the construction page to generate a page, so as to reduce the workload of developing the page. When there is any change of data in the business table, the users simply need to reload a corresponding business table into the construction page to generate the page quickly, so as to facilitate the modification and update operations.

If the units of the embodiments of the present disclosure are in form of a software functional module and used as an independent product to be sold or use, these units may be stored in a computer readable storage medium. Based on such understanding, a part or the whole of the technical solution of the present disclosure basically can be achieved by a computer software product, and the computer software product may be stored in a storage medium including a plurality of instructions used for driving a computer device (such as a personal computer, a terminal, or a network device, etc.) to carry out a part or the whole of the steps of the method in accordance with different embodiments of the present disclosure. The aforementioned storage medium includes a USB disk, a portable hard disk, a read only memory (ROM), a random access memory (RAM), a floppy disk, or an optical disk, etc. capable of storing program codes. Therefore, the embodiments of the present disclosure are not limited to any specific combination of hardware and software.

Correspondingly, this embodiment of the present disclosure discloses a computer readable storage medium including one or more programs executed by one or more processors to carry out the steps of: providing a construction interface of a page, and the construction interface including at least an object loading area and a relation setting area, and the object loading area being provided for a user to select a business scene from default business scenes and at least two business tables from the selected business scene, and the relation setting area being provided for the user to select at least a relation type from default relation types to determine the relation between the selected business tables; determining whether or not the business table is loaded into the object loading area; determining whether or not the relation type is selected in the relation setting area; generating a page metadata according to the loaded business table and the selected relation type if the business table is loaded into the object loading area and the relation type is selected in the relation setting area; and generating a page associated with the business scene according to the page metadata if a page generation instruction is received.

Optionally, before the page associated with the business scene is generated according to the page metadata, the one or more programs are further executed by the one or more processors to carry out the steps of: setting up a generation icon on the construction interface, the generation icon being provided for a user to activate the generation icon; and generating the page generation instruction if the user activates an operation of the generation icon.

Optionally, the default business scenes include a plurality of business scenes, each having a plurality of business tables, and the default relation types include a plurality of relation types, and different relation types may be set between any two business tables in the same business scene.

Optionally, the one or more programs are further executed by the one or more processors to carry out the steps of: displaying the generated page, wherein the page has an inquiry area and an inquiry result display area, and the inquiry area is provided for a user to input an inquiry condition associated with the business table, and different default relation types correspond to different display templates respectively, and the inquiry result display area is provided for displaying the content according to the display template.

Optionally, the one or more programs are further executed by the one or more processors to carry out the steps of: displaying an attribute information editing window of the business table which is provided for a user to edit the attribute information of the business table if the business table is clicked on the page by the user is received; and editing the attribute information of the business table if the operation of editing the attribute information of the business table by the user is received.

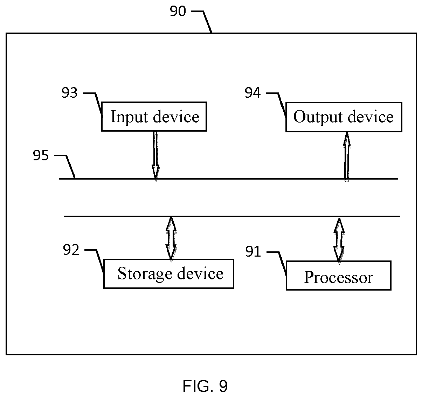

With reference to FIG. 9 for a schematic block diagram of a page construction device in accordance with the ninth embodiment of the present disclosure, the page construction device 90 includes one or more processors 91, a storage device 92, one or more input devices 93, and one or more output devices 94. The processor 91, input device 93, output device 94 and storage device 92 are coupled by a bus 95.

The input device 93 is provided for a user to select a business scene from the default business scenes and at least two business tables from the business scene. In a specific implementation, the input device 93 of an embodiment of the present disclosure includes a keyboard, a mouse, an optoelectronic input device, a sound input device, a touch input device, etc.

The output device 94 is provided for displaying the generated page. In a specific implementation, the output device 94 of an embodiment of the present disclosure includes a display device, a display screen, a touch screen, etc.

The storage device 92 is provided for storing program data of different functions. In a specific implementation, the storage device 92 of an embodiment of the present disclosure may be a system memory such as a volatile memory (RAM), a non-volatile memory (ROM, flash memory, etc.), or a combination of both. In a specific implementation, the storage device 92 of an embodiment of the present disclosure may be an external storage device such as a floppy disk, an optical disk, a magnetic tape, etc.

The processor 91 is provided for calling the program data stored in the storage device 92 and execute the following operations:
Provide a construction interface of a page, wherein the construction interface includes at least an object loading area and a relation setting area, and the object loading area is provided for a user to select a business scene from the default business scenes and at least two business tables from the business scene, and the relation setting area is provided for a user to select at least a relation type from the default relation types to determine the relation between the selected business tables.

Determine whether or not the business table is loaded into the object loading area.

Determine whether or not the relation type is selected in the relation setting area.

Generate the page metadata according to the loaded business table and the selected relation type if the business table is loaded into the object loading area and the relation type is selected in the relation setting area.

Generate a page associated with the business scene according to the page metadata if a page generation instruction is received.

Further, the processor 91 executes the following operations before the page associated with the business scene is generated according to the page metadata:
Set a generation icon on the construction interface, wherein the generation icon is provided for a user to activate.

Generate the page generation instruction if an operation of turning on the generation icon by the user is received.

Further, the default business scenes include a plurality of business scenes, each including a plurality of business tables and the default relation types also includes a plurality of relation types, and different relation types may be set between any two business tables in the same business scene.

Further, the processor 91 further executes the following operations:
Display the generated page, wherein the page has an inquiry area and an inquiry result display area, and the inquiry area is provided for a user to input an inquiry condition associated with the business table, and different default relation types correspond to different display templates respectively, and the inquiry result display area is provided for displaying the content according to the display template.

Further, the processor 91 further executes the following operations:
Display an attribute information editing window of the business table which is provided for a user to edit the attribute information of the business table if an operation of clicking a business stable on the page by the user is received.

Perform an editing operation of editing the attribute information of the business table if the operation of editing the attribute information of the business table is received.

People having ordinary skill in the art should understand clearly that the specific operation and process of the aforementioned terminal and units are described in a simple and convenient manner, and one may refer to the corresponding operation and process of the aforementioned method.

It is understood that the terminal and method as disclosed in the embodiments of this in invention may also be implemented in different methods, and the above devices are just described in a way for the illustrative purpose and not intended to be restrictive, and these devices may be implemented by different methods. For example, the unit is divided by logical functions, but it may also be divided by other methods. Several units or components may be combined with each other or integrated into another system, or some of the characteristics may be ignored or not executed. In addition, the coupling between devices or units as described in the specification may be a direct coupling or a communicative coupling through an interface, or an electrical, mechanical, and other coupling.

People having ordinary skill in the art should be able to understand that the whole or a part of the steps of the method in accordance with the aforementioned embodiments may be achieved by hardware, and may also be achieved by an instruction sent by a software program to the hardware, and the program may be stored in a computer readable storage medium, wherein the storage medium as mentioned above may be a read only memory, a floppy disk, or an optical disk, etc. In addition, the order of the steps of the method of the aforementioned embodiments of the invention may be adjusted, combined or deleted according to actual needs.

The units of the terminal of the aforementioned embodiments of the invention may be adjusted, combined or deleted according to actual needs.

The unit described as a separated part may or may not be separated physically, and a part displayed by the unit may or may not be a physical unit which can be situated at a place or distributed to several different network units. A part or the whole of these units may be selected according to actual needs to achieve the objective of the embodiments of the present disclosure.

In addition, different functions of each embodiment of the present disclosure may be integrated into a processing unit or exist independently, or two or more units are integrated into one. The aforementioned integrated unit may be achieved by hardware or a software functional unit.

When the integrated unit is achieved by a software functional unit and sold or use all by itself, the unit may be stored in a computer readable storage medium. Based on such understanding, a part or the whole of the technical solution of the present disclosure basically can be achieved by a computer software product, and the computer software product may be stored in a storage medium including a plurality of instructions used for driving a computer device (such as a personal computer, a terminal, or a network device, etc.) to carry out a part or the whole of the steps of the method in accordance with different embodiments of the present disclosure. The aforementioned storage medium includes a USB disk, a portable hard disk, a read only memory (ROM), a random access memory (RAM), a floppy disk, or an optical disk, etc. capable of storing program codes.

While the invention has been described by means of specific embodiments, numerous modifications and variations could be made thereto by those skilled in the art without departing from the scope and spirit of the invention set forth in the claims.

## Claims

1. A page construction method, comprising:
providing a construction interface of a page, and the construction interface comprising at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables;
determining whether or not the business table is loaded into the object loading area;
determining whether or not the relation type is selected in the relation setting area;
generating a page metadata according to the loaded business table and the selected relation type if the business table is loaded into the object loading area and the relation type is selected in the relation setting area; and
generating a page associated with the business scene according to the page metadata if a page generation instruction is received.

2. The method of claim 1, wherein before the step of generating a page associated with the business scene according to the page metadata if a page generation instruction is received, further comprising:
setting up a generation icon on the construction interface, the generation icon being provided for a user to activate; and
generating the page generation instruction if the user's operation of activating the generation icon is received.

3. The method of claim 1, wherein the default business scenes comprise a plurality of business scenes, each having a plurality of business tables, and the default relation types comprise a plurality of relation types, and different relation types may be set up between any two business tables in the same business scene.

4. The method of claim 1, further comprising:
displaying the generated page, wherein the page has an inquiry area and an inquiry result display area, and the inquiry area is provided for a user to input an inquiry condition associated with the business table, and different default relation types correspond to different display templates respectively, and the inquiry result display area is provided for displaying the content according to the display template.

5. The method of claim 4, further comprising:
displaying an attribute information editing window of the business table provided for the user to edit attribute information of the business table if the business table clicked on the page by the user is received; and
editing attribute information of the business table if the user's operation of editing the attribute information of the business table is received.

6. A terminal, comprising:
a providing unit, for providing a construction interface of a page, the construction interface comprising at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables;
a determination unit, for determining whether or not the business table is loaded into the object loading area, and determining whether or not the relation type is selected in the relation setting area; and
a generation unit, for generating a page metadata according to the loaded business table and the selected relation type if the business table is loaded into the object loading area and the relation type is selected in the relation setting area, and generating a page associated with the business scene according to the page metadata if the page generation instruction is received.

7. The terminal of claim 6, further comprising a setting unit for setting up a generation icon on the construction interface for a user to activate, wherein the generation unit is also provided for generating the page generation instruction if the user's operation of activating the generation icon is received.

8. The terminal of claim 6, wherein the default business scenes comprise a plurality of business scenes, each having a plurality of business tables, and the default relation types comprise a plurality of relation types, and different relation types may be set up between any two business tables in the same business scene.

9. The terminal of claim 6, further comprising:
a display unit, for displaying the generated page, wherein the page has an inquiry area and an inquiry result display area, and the inquiry area is provided for a user to input an inquiry condition associated with the business table, and different default relation types correspond to different display templates respectively, and the inquiry result display area is provided for displaying the content according to the display template.

10. The terminal of claim 9, wherein the display unit is also provided for displaying an attribute information editing window of the business table which is provided for the user to edit attribute information of the business table if the business table clicked on the page by the user is received; and the terminal further comprises an editing unit for editing the attribute information of the business table if the user's operation of editing the attribute information of the business table is received.

11. A computer readable storage medium, comprising one or more programs executed by one or more processors to carry out the steps of:
providing a construction interface of a page, and the construction interface comprising at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables;
determining whether or not the business table is loaded into the object loading area; determining whether or not the relation type is selected in the relation setting area; generating a page metadata according to the loaded business table and the selected relation type if the business table is loaded into the object loading area and the relation type is selected in the relation setting area; and
generating a page associated with the business scene according to the page metadata if a page generation instruction is received.

12. The computer readable storage medium of claim 11, wherein before the step of generating a page associated with the business scene according to the page metadata, the one or more programs are further executed by the one or more processors to carry out the steps of:
setting up a generation icon on the construction interface, the generation icon being provided for a user to activate; and
generating the page generation instruction if the user's operation of activating the generation icon is received.

13. The computer readable storage medium of claim 11, wherein the default business scenes comprise a plurality of business scenes, each having a plurality of business tables, and the default relation types comprise a plurality of relation types, and different relation types may be set up between any two business tables in the same business scene.

14. The computer readable storage medium of claim 11, wherein the one or more programs are further executed by the one or more processors to carry out the steps of: displaying the generated page, wherein the page has an inquiry area and an inquiry result display area, and the inquiry area is provided for a user to input an inquiry condition associated with the business table, and different default relation types correspond to different display templates respectively, and the inquiry result display area is provided for displaying the content according to the display template.

15. The computer readable storage medium of claim 14, wherein the one or more programs are further executed by the one or more processors to carry out the steps of:
displaying an attribute information editing window of the business table provided for the user to edit attribute information of the business table if the business table clicked on the page by the user is received; and
editing attribute information of the business table if the user's operation of editing the attribute information of the business table is received.

16. A page construction device, comprising a storage device and a processor; wherein the storage device is provided for storing an instruction; and the processor is provided for reading the instruction stored in the storage device and executing the following operation according to the instruction:
providing a construction interface of a page, and the construction interface comprising at least an object loading area and a relation setting area, and the object loading area being provided for a user to select a business scene from default business scenes and to select at least two business tables from the selected business scene, and the relation setting area being provided for the user to select at least one relation type from default relation types to determine the relation between the selected business tables;
determining whether or not the business table is loaded into the object loading area;
determining whether or not the relation type is selected in the relation setting area;
generating a page metadata according to the loaded business table and the selected relation type if the business table is loaded into the object loading area and the relation type is selected in the relation setting area; and
generating a page associated with the business scene according to the page metadata if a page generation instruction is received.

17. The page construction device of claim 16, wherein before the step of generating a page associated with the business scene according to the page metadata if a page generation instruction is received, the processor further executes the steps of:
setting up a generation icon on the construction interface, the generation icon being provided for a user to activate; and
generating the page generation instruction if the user's operation of activating the generation icon is received.

18. The page construction device of claim 16, wherein the default business scenes comprise a plurality of business scenes, each having a plurality of business tables, and the default relation types comprise a plurality of relation types, and different relation types may be set up between any two business tables in the same business scene.

19. The page construction device of claim 16, wherein the processor further executes the step of displaying the generated page, wherein the page has an inquiry area and an inquiry result display area, and the inquiry area is provided for a user to input an inquiry condition associated with the business table, and different default relation types correspond to different display templates respectively, and the inquiry result display area is provided for displaying the content according to the display template.

20. The page construction device of claim 19, wherein the processor further executes the steps of:
displaying an attribute information editing window of the business table provided for the user to edit attribute information of the business table if the business table clicked on the page by the user is received; and
editing attribute information of the business table if the user's operation of editing the attribute information of the business table is received.
